# EUROPÄISCHE PATENTSCHRIFT

(11) **EP 0 656 492 B1**
(45) Veröffentlichungstag und Bekanntmachung des Hinweises auf die Patenterteilung: **30.07.1997**
(21) Anmeldenummer: 94118262.8
(22) Anmeldetag: 19.11.1994
(51) Int. Cl.: F16H 59/02, G05G 5/20

(54) **Getriebeschalthebelanordnung**
Shift lever arrangement for transmission
Disposition de levier de commande d'une boite de vitesses

(30) Priorität: 01.12.1993 US 160545
(43) Veröffentlichungstag der Anmeldung: 07.06.1995
(60) Teilanmeldung: 96117317.6
(73) Patentinhaber: DEERE & COMPANY, Moline, Illinois 61265 (US)
(72) Erfinder: Easton, David Joseph, Cedar Falls, Iowa 50613 (US); Uehle, Howard Thomas, Cedar Falls, Iowa 50613 (US)
(74) Vertreter: Feldmann, Bernhard

(56) Entgegenhaltungen:
- EP-A- 0 075 693
- FR-A- 2 143 094
- FR-A- 2 298 827
- FR-A- 2 437 315
- GB-A- 2 054 773
- US-A- 4 830 156
- US-A- 5 184 523
- US-A- 5 243 871

## Beschreibung

Die Erfindung betrifft eine Getriebeschalthebelanordnung, insbesondere eine Steuerhebelanordnung für eine Lastschaltgetriebesteuerung, die durch stoßweises oder Impulsschalten betätigt wird.

Elektronisch gesteuerte Lastschaltgetriebe erfordern eine durch die Bedienungsperson betätigbare Steuereinrichtung, mit beispielsweise einem oder zwei Schalthebeln, durch die Steuersignale erzeugt werden, welche das Getriebe steuern. Die US-A-4,425,620 und die US-A-4,855,913, die jede für sich den gattungsgemäßen Stand der Technik bildet, zeigen beispielsweise Getriebe, die durch zwei Hebel betätigt werden: einen Mode-Wahlhebel zur Auswahl zwischen Vorwärts, Neutral und Rückwärts und ein Impuls- oder Hochschalt/Runterschalt-Hebel. Ferner ist ein Lastschaltgetriebe mit zwei Hebeln bekannt, das bei der Planierraupenserie 700 der Fa. Champion Road Machinery verwendet wird.

Es wurden bisher verschiedene Konstruktionen vorgeschlagen, bei denen durch einen einzigen Hebel sowohl die Modeauswahl-Funktion als auch die Hochschalt/Runterschalt-Funktion ausgeführt werden. Beispielsweise wird bei der Traktorserie 8030 der Fa. Ford New Holland eine Schaltungssteuerung mit nur einem Schalthebel verwendet. Bei dieser Hebelkonstruktion ist der Schalthebel in Längsrichtung in eine Vorwärts-, eine Neutral- und in eine Rückwärtsposition und in Querrichtung von jeder dieser Positionen in Hoch- und Runterschalt-Unterpositionen verschiebbar. Die Konstruktion bietet jedoch keine Parkposition. Diese wird durch eine separate Einrichtung realisiert. Ferner erfordert diese Konstruktion, daß ein auf dem Schalthebel befestigter Sperring angehoben wird, um den Schalthebel aus seiner Neutralstellung nach vorn oder hinten zu bewegen.

Die US-A-4,442,730 zeigt ein Getriebe, das durch einen Hebel gesteuert wird, welcher zwischen einer Vorwärts-, Neutral- und Rückwärtsposition bewegbar und aus seiner Vorwärts- und Rückwärtsposition quer in Hoch- und Runterschaltpositionen verstellbar ist. Die US-A-4,991,454 zeigt ein Schema für einen Getriebeschaltsteuerhebel, welches eine Vorwärts-, Neutral- und Rückwärtsposition enthält. Der Hebel ist aus jeder dieser Positionen in Hoch- und Runterschalt-Unterpositionen bewegbar. Die US-A-4,926,172 und die US-A-5,243,871 zeigen Hebelmechanismen mit einer Führung, durch die ein Schaltmuster ähnlich dem in der US-A-4,991,454 beschriebenen gebildet wird. Bei diesen Einhebelkonstruktionen erfordert die Hoch- und Runterschaltfunktion eine Hebelbewegung in Richtungen, die quer zu der Bewegungsrichtung für die Mode-Auswahlfunktion liegen.

Eine weitere Einhebelschaltsteuerung ist durch die Traktorserie 6100 der Fa. Agco White bekannt. Bei dieser Einhebelkonstruktion gibt es einen einzigen linearen in Längsrichtung ausgerichteten Schlitz mit Vorwärts-Hochschalt-, -Nichtschalt- und -Runterschalt-Positionen in einem vorderen Schlitzbereich und Rückwärts-Hochschalt-, -Nichtschalt- und-Runterschalt-Positionen in einem hinteren Schlitzbereich. Diese Konstruktion enthält jedoch keine Parkposition. Diese wird durch einen separaten Hebel bereitgestellt. Die Konstruktion erfordert ferner, daß ein separater, auf dem oberen Ende des Hebels angeordneter Druckknopf herunter gedrückt wird, um den Hebel aus seiner Neutralposition herauszubewegen. Die Bedienung einer derartigen Hebelschaltsteuerung ist schwierig, und es gibt keine Führungs-Hebelbahn, durch die die angewendete Schaltfunktion sicher angezeigt wird.

Die GB-A-2 054 773 beschreibt einen Mechanismus zur Auswahl der Getriebeübersetzung, bei dem die Gänge durch einen Gangschalthebel und die Gruppen durch einen Gruppenschalthebel einstellbar sind. Durch die Bedienungshebel lassen sich über Steuerkurvenscheiben übliche Synchronisiereinrichtungen betätigen, um die gewünschten Zahnräder des Getriebes miteinander in Eingriff zu bringen. Der Gruppenschalthebel verläuft in einer Führungskulisse, die einen mittleren Hauptschlitz und vier hierzu parallele Seitenschlitze aufweist. Jeweils ein Ende jedes Seitenschlitzes steht über einen senkrecht zum Hauptschlitz ausgerichteten Verbindungsschlitz mit dem Hauptschlitz in Verbindung. Zwei Verbindungsschlitze zweigen zu entgegengesetzten Seiten an den beiden Enden des Hauptschlitzes ab, während zwei weitere Verbindungsschlitze zu entgegengesetzten Seiten im mittleren Bereich des Hauptschlitzes abzweigen. Die Abzweiglagen der Verbindungsschlitze definieren jeweils eine Vorwärtsgruppe. Die Endlagen der Seitenschlitze definieren jeweils eine Rückwärtsgruppe.

Es ist wünschenswert, eine Schaltsteuerung vom Einhebeltyp zur Verfügung zu haben, die sowohl die Auswahlfunktion für den Vorwärts-, Neutral- und Rückwärts-Modus als auch die Hochschalt/Runterschalt-Funktion in Abhängigkeit von natürlichen oder intuitiven Hebelbewegungen ermöglicht, eine Parkposition einschließt und keinen Druckknopf oder Sperring erfordert.

Die der Erfindung zugrunde liegende Aufgabe wird darin gesehen, eine Getriebeschalt-Steuerhebelanordnung bereitzustellen, die es erlaubt, die Mode-Auswahlfunktion und die Hochschalt-/Runterschalt-Funktion durch eine natürliche oder intuitive Bewegung eines Hebels auszuführen. Dabei soll sowohl die Mode-Auswahlfunktion als auch die Hochschalt/Runterschalt-Funktion durch eine Bewegung in Längsrichtung ermöglicht werden. Die Steuerhebelanordnung soll eine Parkposition einschließen und weder einen Druckknopf noch einen Sperring erfordern.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Steuerhebelanordnung enthält einen Hebel, der an einem Gehäuse in Längs- und Querrichtung schwenkbar befestigt ist. An einem Ende des Gehäuses ist eine Führungsplatte befestigt und weist einen Führungsschlitz auf, der den Hebel aufnimmt. Der Führungsschlitz enthält einen in Längsrichtung verlaufenden Hauptschlitz sowie einen ersten, zweiten und dritten Unterschlitz, die ebenfalls in Längsrichtung ausgerichtet, von dem Hauptschlitz in Querrichtung getrennt und in einer Reihe auf einer Seite des Hauptschlitzes angeordnet sind. Jeder der Unterschlitze ist durch einen quer ausgerichteten Querschlitz mit dem Hauptschlitz verbunden. Ein Sektorteil ist schwenkbar zwischen dem Gehäuse und dem Hebel befestigt. Auf dem Hebel ist ein erster Magnet befestigt. Ein zweiter Magnet ist auf dem Sektorteil befestigt. Auf dem Gehäuse sind Halleffektsensoren angeordnet. Das Sektorteil, die Magneten und die Halleffektsensoren wirken derart zusammen, daß Signale, die der Lage des Hebels innerhalb des Führungsschlitzes entsprechen, erzeugt werden. Durch eine Hebelrückstellfeder wird der Hebel in eine rückwärtige Position des Hauptschlitzes gedrängt. Eine Querrückstellfeder drängt den Hebel in Richtung Sektorteil. Eine Zentrierfeder drängt das Sektorteil in eine hinsichtlich des Gehäuses mittlere Position. Rastmittel halten den Hebel lösbar innerhalb eines Unterschlitzes.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine seitliche Zusammenbauansicht der erfindungsgemäßen Steuerhebelanordnung,
- Fig. 2: eine Zusammenbauansicht der erfindungsgemäßen Steuerhebelanordnung von oben,
- Fig. 3A und 3B: zwei zusammengehörige Explosionsdarstellungen einer erfindungsgemäßen Steuerhebelanordnung und
- Fig. 4A und 4B: zwei zusammengehörige Explosionsdarstellungen einer erfindungsgemäßen Steuerhebelanordnung aus einer anderen Perspektive.

Die Steuerhebelanordnung 10 des Ausführungsbeispiels enthält ein Gehäuse 12, welches eine plattenförmige Basiswandung 14 und eine umlaufende Randwandung 16 enthält. Die Basiswandung 14 weist in der Nähe ihres unteren Endes eine Bohrung 18 und eine radial zu der Bohrung 18 beabstandete bogenförmige Öffnung 20 auf. Radial unter der Öffnung 20 befindet sich ein bogenförmiger Zentrierfederschlitz 21. Die Steuerhebelanordnung 10 ist für die Verwendung bei elektronisch gesteuerten Lastschaltgetrieben, wie sie von verschiedenen Herstellern angeboten werden, vorgesehen.

Eine Führungsplatte 22 ist an einem oberen Ende des Gehäuses 12 befestigt. In die Führungsplatte 22 ist ein Führungsschlitz 24 eingelassen. Der Führungsschlitz 24 enthält einen relativ langen, sich in Längsrichtung erstreckenden Hauptschlitzbereich 26. Der Führungsschlitz 24 enthält ferner einen sich in Längsrichtung erstreckenden Vorwärtsschlitz 28 für das Hoch- und Runterschlaten bei Vorwärtsfahrt, einen sich in Längsrichtung erstreckenden Rückwärtsschlitz 30 für das Hoch- und Runterschalten bei Rückwärtsfahrt und einen sich in Längsrichtung erstreckenden Parkschlitz 32. Die Schlitze 28, 30 und 32 sind kürzer als der Hauptschlitz 26 und sind zu diesem in Querrichtung beabstandet. Die Schlitze 28 und 30 stehen mit dem Hauptschlitz 26 durch entsprechende querverlaufende Verbindungsschlitze 34 bzw. 36 in Verbindung. Der Parkschlitz 32 ist mit dem Hauptschlitz 26 durch einen sich quer erstreckenden Neutralschlitz 38 verbunden.

Auf einer Seite des Gehäuses 12 ist eine Schalteraufnahme 31 ausgebildet. In diese Schalteraufnahme 31 ist ein im Handel erhältlicher Springschalter 33 einsetzbar. Der einrastbare Schalter 33 wird vorzugsweise als Neutralstartschalter verwendet, wie er in der US-A-5,251,733 beschrieben ist, auf die hiermit zwecks Offenbarung verwiesen wird.

Ein Schwenkteil 40 enthält eine Welle 42, die drehbar von der Bohrung 18 aufgenommen wird, und einen Arm 44, der radial von einem Ende der Welle 42 absteht. Der Arm 44 wird durch zwei im wesentlichen parallele Seiten 46 und 48 gebildet, zwischen denen ein Schlitz 50 ausgebildet ist. Der Endbereich 52 des Arms 44 ist parallel zu der Achse der Welle 42 und in Richtung der Platte 14 ausgerichtet. In dem Endbereich 52 ist ein Schlitz 53 ausgebildet. Eine Schwenkbohrung 54 erstreckt sich durch die Seiten 46 und 48 in der Nähe der Welle 42. Eine Erhebung 56 ragt von einer Seite 46 vor und dient dem Eingriff mit dem Neutralstartschalter 33.

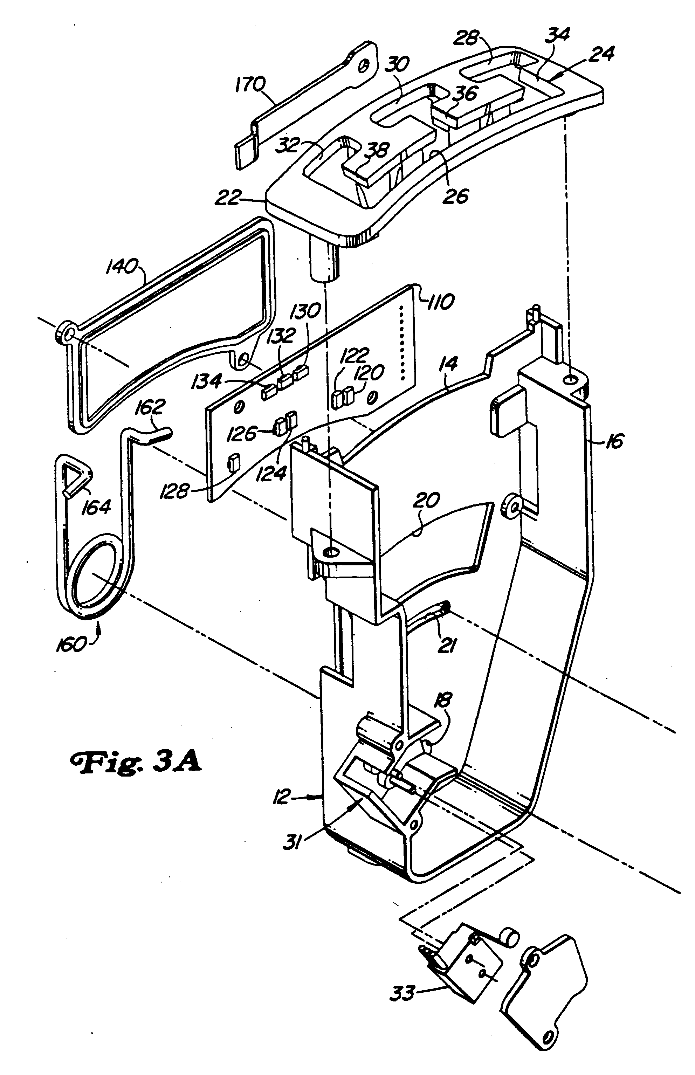

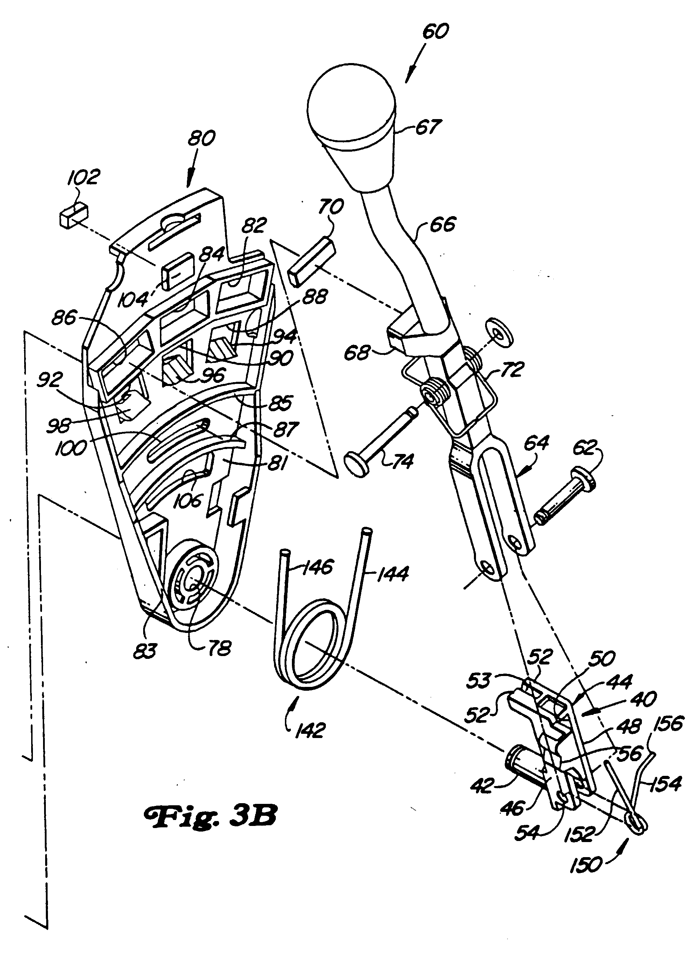

Ein Hebel 60 ist durch einen Schwenkstift 62, der sich durch einen gabelförmigen Bereich 64 des Hebels 60 und durch die Schwenkbohrung 54 erstreckt, schwenkbar mit dem Arm 44 verbunden. Der Hebel 60 enthält einen Schaft 66, der innerhalb des Führungsschlitzes 24 bewegbar ist und der sich von dem gabelförmigen Bereich 64 bis zu einer Handhabe 67, die durch eine Bedienungsperson ergriffen werden kann, erstreckt. Der Schaft 66 trägt einen Magnetträger 68, der von einem mittleren Bereich des Schaftes 66 in Richtung der Gehäusewandung 14 vorsteht. Wie am besten aus Fig. 3B hervorgeht, ist ein Permanentmagnet 70 im Magnetträger 68 befestigt. Durch die beschriebene Ausbildung läßt sich der Hebel 60 in Längsrichtung um die Achse der Welle 42 und in Querrichtung um die Achse des Schwenkstiftes 62 verschwenken. Zwischen dem gabelförmigen Bereich 64 und dem Magnetträger 68 ist an dem Schaft 66 mittels eines Stiftes 74 eine Rastfeder 72 befestigt, die zwei Schenkel enthält, welche sich zwischen zwei von dem Stift 74 gehaltenen Schraubenfederabschnitten erstrecken.

Zwischen dem Hebel 60 und der Wandung 14 ist ein Sektorteil 80 angeordnet. Das Sektorteil 80 weist einen im wesentlichen fächerförmigen Körper 81 auf, der teilweise durch eine vorstehende Randwandung 83 umgeben ist. Zwei bogenförmige Verstärkungsrippen 85 und 87 erstrecken sich über den Körper 81 von einer zur anderen Seite der Randwandung 83. Durch das untere Ende des Sektorteils 80 erstreckt sich eine Bohrung 78, die die Welle 42 drehbar aufnimmt. Das Sektorteil 80 weist eine erste zum Hebel 60 weisende Seite und eine zweite zur Wandung 14 weisende Seite auf. Das Sektorteil 80 hat eine erste, zweite und dritte Sensoröffnung 82, 84 und 86, die radial zu der Wellenbohrung 78 beabstandet und in einer bogenförmigen Reihe angeordnet sind, welche in der Achse der Bohrung 78 zentriert ist.

Zu jeder Sensoröffnung 82, 84, 86 ist weiter radial innen eine entsprechende Rastöffnung 88, 90 bzw. 92 vorgesehen. Von der unteren Kante jeder Rastöffnung 88, 90, 92 steht beidseits ein Rastteil 94, 96 bzw. 98 vor. Jedes der Rastteile 94, 96 und 98 wird durch zwei Rampenflächen gebildet, welche von einem linear und quer zu der Achse der Welle 42 ausgerichteten Scheitel aus schräg nach unten geneigt sind. Die Rastfeder 72 kann lösbar mit den Rastteilen 94, 96 und 98 in Eingriff gebracht werden, um den Hebel 60 lösbar innerhalb eines der Schlitze 28, 30 oder 32 festzuhalten.

Ein bogenförmiger Zentrierfederschlitz 100 befindet sich in radialer Hinsicht weiter innen als die Rastöffnungen 88, 90, 92. Ein zweiter Permanentmagnet 102 wird in einer Ausnehmung 104 gehalten, welche radial über der Sensoröffnung 84 auf der Seite des Sektorteils 80 liegt, die der Wandung 14 zugewandt ist. Radial innerhalb der Verstärkungsrippe 87 befindet sich ein bogenförmiger Schlitz 106, der der Aufnahme des Endbereiches 52 des Schwenkteils 40 dient, in dem der Schlitz 53 ausgebildet ist.

Eine Schaltkarte 110 ist auf der gegenüber dem Sektorteil 80 liegenden Seite der Wandung 14 radial über der Öffnung 20 und im wesentlichen in Deckung mit den Sensoröffnungen 82 - 86 und mit dem Magnet 102 befestigt. Auf der Seite der Schaltkarte 110, die dem Sektorteil 80 zugewandt ist, sind Hallsensoren oder Schalter befestigt. Die Sensoren 120 und 122 sind in Deckung mit der Öffnung 82 befestigt und werden vorzugsweise als Vorwärts- bzw. als "Nicht-Neutral"-Schalter verwendet. Die Sensoren 124 und 126 sind in Deckung mit der Öffnung 84 befestigt und werden vorzugsweise als "Nicht-Neutral"- bzw. Rückwärtsschalter verwendet. Der Sensor 128 ist in Deckung mit der Öffnung 86 befestigt und wird vorzugsweise als Parkschalter verwendet. Die Sensoren 130, 132 und 134 sind in Deckung mit dem zweiten Magneten 102 befestigt und werden vorzugsweise als Schaltimpuls-, "Nichtschalt"- bzw. Schaltimpuls-Schalter verwendet. Die Schaltkarte 110 wird durch eine Abdeckung 140 geschützt, die mit der Wandung 14 verschraubbar ist.

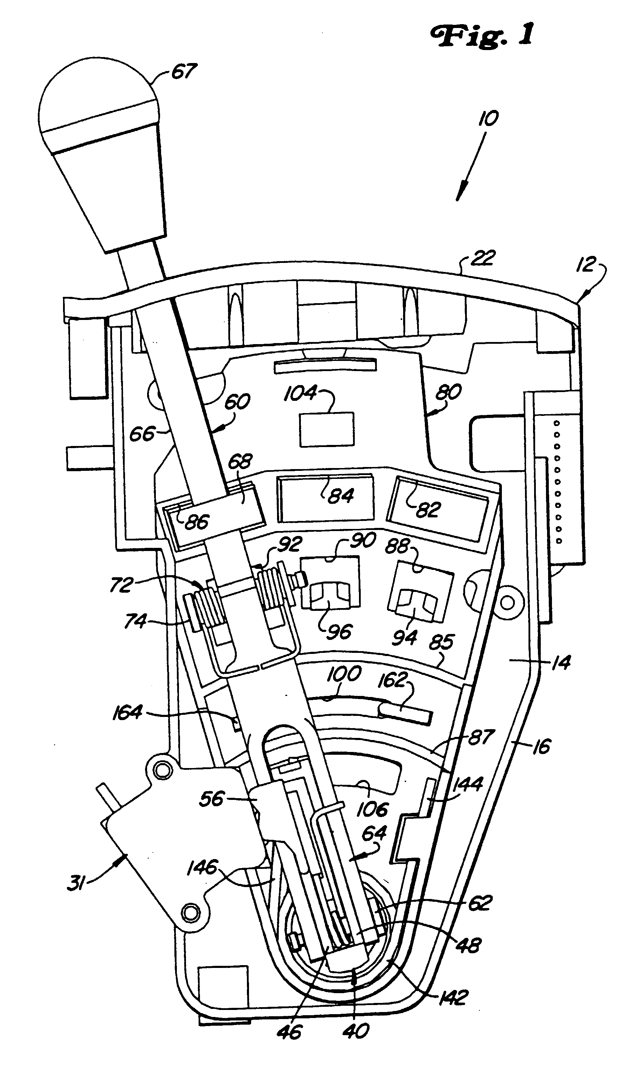

Eine Hebelrückstellfeder 142 enthält einen konzentrisch zur Welle 42 ausgerichteten Schraubenfederabschnitt, einen Schenkel 144, welcher mit der Randwandung 83 des Sektorteils 80 in Eingriff steht, und einen Schenkel 146, welcher von dem Schlitz 52 des Schwenkteils 40 aufgenommen wird. Die Feder 142 ist vorgespannt und drückt den Hebel 60 bezüglich des Sektorteils 80 gegen den Uhrzeigerdrehsinn (Fig. 1).

Eine Querrückstellfeder 150 enthält einen zwischen den Seiten 46 und 48 des Schwenkteils 40 liegenden, konzentrisch zum Schwenkstift 62 ausgerichteten Schraubenfederabschnitt, einen Schenkel 152, welcher mit einem Teil des Schwenkteils 40 in Eingriff steht, und einen Schenkel 154 mit einem abgebogenen Ende 156, welches mit dem gabelförmigen Ende 64 des Hebels 60 in Eingriff steht. Die Feder 150 ist vorgespannt und drückt den Hebel 60 in Richtung des Sektorteils 80.

Eine Zentrierfeder 160 enthält einen konzentrisch zur Welle 42 ausgerichteten Schraubenfederabschnitt und Schenkel 162 und 164, die sich durch den Schlitz 21 der Wandung 14 des Gehäuses 12 und den Schlitz 100 des Sektorteils 80 erstrecken. Die Zentrierfeder 160 ist vorgespannt, so daß die Schenkel 162 und 164 aufgespreizt oder voneinander weg bewegt werden. Damit wirkt die in die Schlitze 21 und 100 eingesetzte Feder 160 derart, daß das Sektorteil 80 hinsichtlich des Gehäuses 12 in eine mittlere Lage gedrängt wird. Die Federn 142 und 160 wirken damit zusammen, um den Hebel 60 in eine Lage zu drängen, in der der Magnetträger 68 in Deckung mit der Öffnung 86 des Sektorteils 80 liegt, so daß die Erhebung 56 normalerweise in Eingriff mit dem Neutralstartschalter 33 steht.

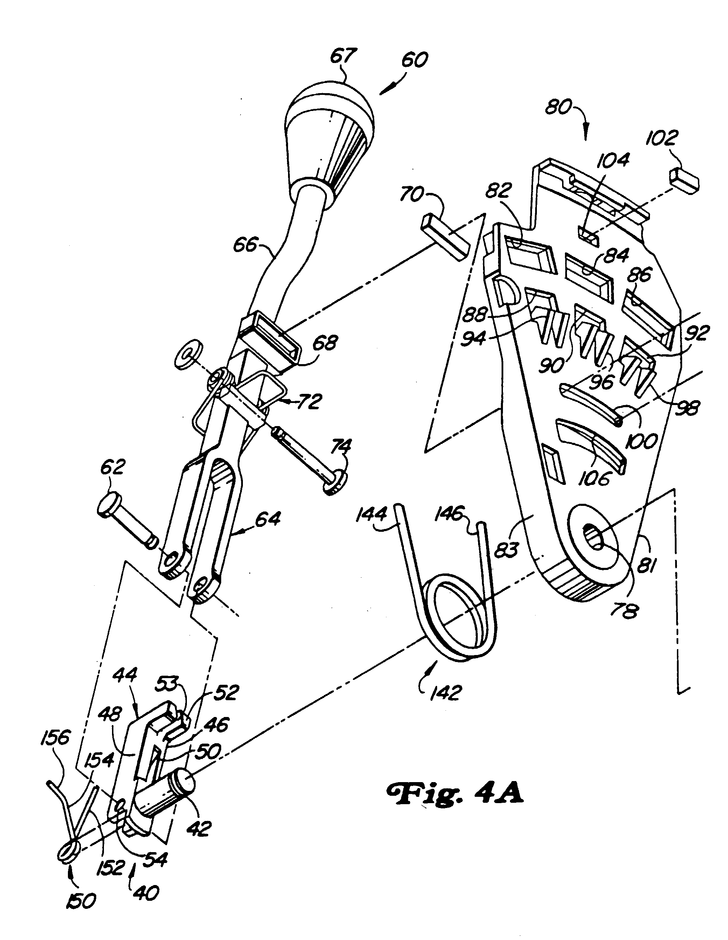

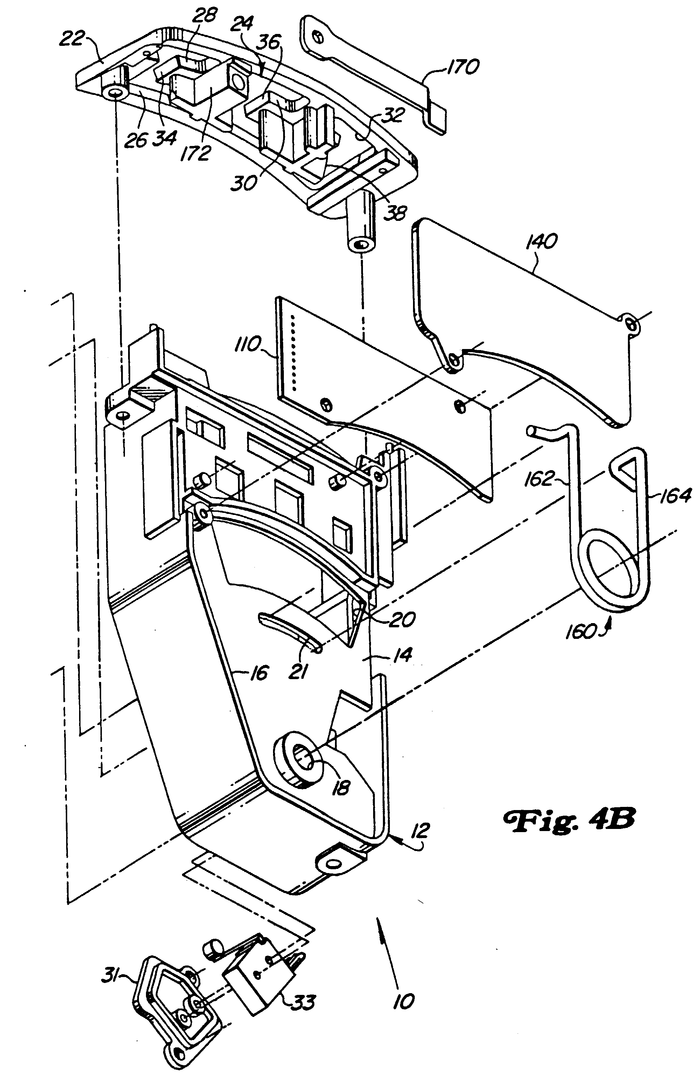

Wie am besten aus Fig. 4B ersichtlich, ist eine Parkeingriffsfeder 170 beispielsweise durch nicht gezeigte Kopfschrauben an einem aufgesetzten Bereich 172, der auf der Unterseite der Führungsplatte 22 angeformt ist, befestigt.

### Betriebsweise

Der nicht durch die Bedienungsperson betätigte Hebel 60 wird normalerweise durch die Federn 142 und 150 in eine Neutralstellung gedrückt, in der sich der Schaft 66 in dem Neutralschlitz 38 zwischen dem Hauptschlitz 26 und dem Parkschlitz 32 befindet. In dieser Position wird der Neutralstartschalter 33 durch die Erhebung 56 betätigt.

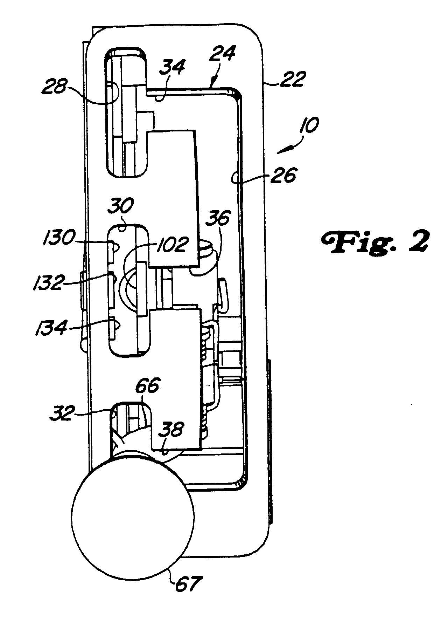

Der Hebel 60 kann nach links in die Position verschoben werden, die in Fig. 2 dargestellt ist. Hierbei wird der Schaft 66 in den Parkschlitz 32 und der Magnetträger 68 in die Öffnung 86 des Sektorteils 80 bewegt, der Magnet 70 betätigt den Halleffekt-Parkschalter 128, und die Rastfeder 72 wirkt mit dem Rastteil 98 zusammen, um den Hebel 60 lösbar in dieser Position zu halten.

Aus dieser Position kann der Hebel 60 nach vorn (oder bezüglich Fig. 2 nach oben) verschoben werden, wobei das Sektorteil 80 sich mit dem Schaft 66 bewegt und der Magnet 102 den Halleffektschalter 130 betätigt. In dieser Lage wirkt die Feder 170 mit dem Schaft 66 zusammen und hält den Hebel 60 lösbar in dieser Position fest. Die Betätigung des Schalters 128, auf die eine Betätigung des Schalters 130 folgt, kann ausgenutzt werden, um eine nicht gezeigte mikroprozessorunterstützte elektronische Steuereinheit zu veranlassen, ein nicht gezeigtes Lastschaltgetriebe in seinen Parkzustand zu überführen.

Aus der zuerst beschriebenen Position kann der Hebel 60 nach rechts, dann nach vorn und schließlich nach links (oder bezüglich Fig. 2 nach rechts, nach oben und nach links) über den Querschlitz 36 in den Rückwärtsschlitz 30 bewegt werden. In diesem Fall bewegt sich der Magnetträger 68 in die Öffnung 84 des Sektorteils 80, der Magnet 70 betätigt den Halleffekt-Rückwärtsschalter 124 und den Halleffekt-"Nicht-Neutral"-Schalter 126, und die Rastfeder 72 wirkt mit dem Rastteil 96 zusammen, um den Hebel 60 lösbar in dem Rückwärtsschlitz 30 zu halten. Wird der Hebel 60 dann nach hinten bewegt, so bewegt sich das Sektorteil 80 mit dem Schaft 66 ebenfalls nach hinten, und der Magnet 102 betätigt den Halleffekt-"Runterschaltimpuls"-Schalter 134 und deaktiviert den Schalter 132. Wenn der Hebel 60 nach vorn bewegt wird, so bewegt sich das Sektorteil 80 mit dem Schaft 66 nach vorn, und der Magnet 102 betätigt den Halleffekt-"Hochschaltimpuls"-Schalter 130 und deaktiviert den Schalter 132. Wird der Hebel 60 losgelassen, so drückt die Feder 160 das Sektorteil 80 und den Hebel 60 bezüglich des Rückwärtsschlitzes 30 in eine mittlere Lage, in der nur der Schalter 132 betätigt wird. Die Betätigung der Schalter 130, 132 und 134 kann ausgenutzt werden, um eine nicht gezeigte mikroprozessor-unterstützte elektronische Steuereinheit zu veranlassen, ein nicht gezeigtes Lastschaltgetriebe im Bereich seiner Rückwärtsgangübersetzungen, die durch die Betätigung der Schalter 124 und 126 freigegeben sind, schrittweise hoch oder runter zu schalten.

Aus der zuerst beschriebenen Position kann der Hebel 60 nach rechts, dann weiter nach vorn und schließlich nach links (oder bezüglich Fig. 2 nach rechts, weiter nach oben und nach links) über den Querschlitz 34 in den Vorwärtsschlitz 28 bewegt werden. In diesem Fall bewegt sich der Magnetträger 68 in die Öffnung 82 des Sektorteils 80, der Magnet 70 betätigt den Halleffekt-Vorwärtsschalter 120 und den Halleffekt-"Nicht-Neutral"-Schalter 122, und die Rastfeder 72 wirkt mit dem Rastteil 94 zusammen, um den Hebel 60 lösbar in dem Vorwärtsschlitz 28 zu halten. Wird der Hebel 60 dann nach hinten bewegt, so bewegt sich das Sektorteil 80 mit dem Schaft 66 nach hinten, und der Magnet 102 betätigt den Halleffekt-"Runterschaltimpuls"-Schalter 134 und deaktiviert den Schalter 132. Wenn der Hebel 60 nach vorn bewegt wird, bewegt sich das Sektorteil 80 mit dem Schaft 66 ebenfalls nach vorn, und der Magnet 102 betätigt den Halleffekt-"Hochschaltimpuls"-Schalter 130 und deaktiviert den Schalter 132. Wird der Hebel 60 losgelassen, so drückt die Feder 160 das Sektorteil 80 und den Hebel 60 bezüglich des Vorwärtsschlitzes 28 in eine mittlere Lage, in der nur der Schalter 132 betätigt wird. Die Betätigung der Schalter 130, 132 und 134 kann ausgenutzt werden, um eine nicht gezeigte mikroprozessor-unterstützte elektronische Steuereinheit zu veranlassen, ein nicht gezeigtes Lastschaltgetriebe im Bereich seiner Vorwärtsgangübersetzungen, die durch die Betätigung der Schalter 120 und 122 freigegeben sind, schrittweise hoch oder runter zu schalten.

Vorzugsweise kann diese Schalthebelanordnung 10 in einer nicht gezeigten Fahrzeugkabine angeordnet und so ausgerichtet sein, daß die lange Dimension des Hauptschlitzes 26 sowie der Unterschlitze 28, 30 und 32 ungefähr parallel zu der Längsrichtung der Fahrzeugausrichtung verläuft.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

Beispielsweise können die Halleffekteinrichtungen durch im Handel erhältliche Springschalter oder durch verfügbare Reluktanzeinrichtungen ersetzt werden. Ferner können potentiometerartige, variable Umformer oder andere konventionelle, verstellbare Signalwandler verwendet werden, um an Stelle der Halleffekteinrichtungen die Lage des Hebels 60 festzustellen.

## Patentansprüche

1. Steuerhebelanordnung zur Erzeugung von Steuersignalen für ein Lastschaltgetriebe mit einem Gehäuse (12), in dem ein Hebel (60) schwenkbar gelagert ist, einer Hebelführung (22) mit einem Schlitz (24), welcher den Hebel (60) verschiebbar aufnimmt und den Hebel (60) zwingt, sich innerhalb eines definierten Pfades zu bewegen, und Signalgeneratoren (120-134) zur Erzeugung von Signalen, die die Position des Hebels (60) innerhalb des Schlitzes (24) repräsentieren, wobei der Schlitz (24) einen sich in eine erste Richtung erstreckenden Hauptschlitz (26) enthält, dadurch gekennzeichnet, daß der Schlitz (24) einen ersten, zweiten und dritten Unterschlitz (28, 30, 32) aufweist, die getrennt von dem Hauptschlitz (26) und zu diesem parallel verlaufen, daß jeder Unterschlitz (28, 30, 32) mit dem Hauptschlitz (26) über einen zugehörigen ersten, zweiten und dritten quer zur ersten Richtung ausgerichteten Verbindungsschlitz (34, 36, 38) verbunden ist, daß der erste Verbindungsschlitz (34) in einen mittleren Bereich des ersten Unterschlitzes (28) mündet, daß der zweite Verbindungsschlitz (36) in einen mittleren Bereich des zweiten Unterschlitzes (30) mündet, und daß der dritte Verbindungsschlitz (38) in einen Endbereich des dritten Unterschlitzes (32) mündet.

2. Steuerhebelanordnung nach Anspruch 1, dadurch gekennzeichnet, daß die Unterschlitze (28, 30, 32) in einer Reihe angeordnet sind, die im wesentlichen parallel zum Hauptschlitz (26) liegt.

3. Steuerhebelanordnung nach Anspruch 1 oder 2, dadurch gekennzeichnet, daß die Länge jedes Unterschlitzes (28, 30, 32) kürzer ist als die Länge des Hauptschlitzes (26).

4. Steuerhebelanordnung nach einem der Ansprüche 1 bis 3, dadurch gekennzeichnet, daß der zweite Unterschlitz (30) zwischen dem ersten und dem dritten Unterschlitz (28, 32) liegt.

5. Steuerhebelanordnung nach einem der Ansprüche 1 bis 4, dadurch gekennzeichnet, daß der dritte Unterschlitz (32) sich von seinem Endbereich aus in Richtung des zweiten und/oder ersten Unterschlitzes (30, 28) erstreckt.

6. Steuerhebelanordnung nach einem der Ansprüche 1 bis 5, gekennzeichnet durch
- ein Gehäuse (12), welches eine Seitenwandung (14) und eine Führungsplatte (22) mit einem Führungsschlitz (24) enthält,
- einen Hebel (60), der an das Gehäuse (12) angelenkt ist und sich in einer ersten Richtung und in einer senkrecht zur ersten Richtung und parallel zu den Verbindungsschlitzen (34, 36, 38) verlaufenden zweiten Richtung bewegen läßt und in dem Führungsschlitz (24) verschiebbar aufgenommen wird,
- ein von dem Hebel getragenes erstes Positionsindikatorelement (70),
- ein Sektorteil (80), das in dem Gehäuse (12) zwischen der Seitenwandung (14) und dem Hebel (60) drehbar gelagert ist, und eine erste, zum Hebel (60) weisende Seite, eine zweite zur Seitenwandung (14) weisende Seite und mehrere Öffnungen (82, 84, 86) längs einer Ebene, die parallel zu der ersten Richtung liegt, aufweist, wobei das Sektorteil (80) in der ersten Richtung verschwenkbar gelagert ist, um das erste Positionsindikationselement (70) in Deckung mit jeder der Öffnungen (82, 84, 86) bringen zu können, und wobei der Hebel (60) in die zweite Richtung verschwenkbar gelagert ist, um das erste Positionsindikationselement (70) in die Öffnungen (82, 84, 86) hinein und aus diesen heraus bewegen zu können, und wobei das Sektorteil (80) und der Hebel (60) gemeinsam in die erste Richtung verschwenkbar sind, sofern das erste Positionsindikationselement (70) von einer der Öffnungen (82, 84, 86) aufgenommen wird,
- ein zweites Positionsindikationselement (102), das auf der zweite Seite des Sektorteils (80) angeordnet ist,
- mehrere an der Seitenwandung (14) angeordnete und mit jeweils einer zugehörigen Öffnung (82, 84, 86) in Deckung liegende Sensoren (120, 122, 124, 126, 128), die bei Annäherung des ersten Positionsindikationselementes (70) ansprechen und anzeigen, ob das erste Positionsindikationselement (70) von der entsprechenden Öffnung (82, 84, 86) aufgenommen wird, und
- mehrere an der Seitenwandung (14) angeordnete und in einer Ebene parallel zu der ersten Richtung liegende Signalgeneratoren (130, 132, 134), die bei Annäherung des zweiten Positionsindikationselementes (102) ansprechen und Signale in Abhängigkeit der Schwenklage des Sektorteils (80) erzeugen.

7. Steuerhebelanordnung nach Anspruch 6, dadurch gekennzeichnet, daß eine erste, zweite und dritte Öffnung (82, 84, 86) und/oder ein erster zweiter und dritter Signalgenerator (130, 132, 134) vorgesehen sind.

8. Steuerhebelanordnung nach einem der Ansprüche 1 bis 7, dadurch gekennzeichnet, daß eine Hebelrückstellfeder (142) an dem Hebel (60) angreift und den Hebel (60) in Richtung eines Endes des Hauptschlitzes (26) des Führungsschlitzes (24) drängt.

9. Steuerhebelanordnung nach einem der Ansprüche 1 bis 8, dadurch gekennzeichnet, daß eine Querrückstellfeder (150) an dem Hebel (60) angreift und den Hebel (60) quer zum Hauptschlitz (26), insbesondere in Richtung des Sektorteils (80) drängt.

10. Steuerhebelanordnung nach einem der Ansprüche 6 bis 9, dadurch gekennzeichnet, daß eine Zentrierfeder an dem Sektorteil (80) angreift und das Sektorteil (80) in eine mittlere Lage drängt.

11. Steuerhebelanordnung nach einem der Ansprüche 1 bis 10, gekennzeichnet durch
- ein Gehäuse (12), das an einem Ende eine Öffnung und nahe eines zweiten Endes eine Bohrung (18) aufweist,
- eine Welle (42), die drehbar von der Bohrung (18) aufgenommen wird,
- eine Arm (44), der mit der Welle (42) verbunden ist und im wesentlichen radial von dieser absteht,
- einen Hebel (60), der schwenkbar an dem Arm (44) angelenkt ist sowie um einen senkrecht zur Achse der Welle (42) ausgerichten Schwenkstift (62) verschwenkbar ist, wobei sich der Hebel (60) um die Welle (42) in eine erste Richtung und um den Schwenkstift (62) in eine zweite Richtung bewegen läßt,
- ein Ansatzteil (68), das in einem radial zur Welle (42) beabstandeten Bereich von dem Hebel (62) absteht,
- ein erstes Positionsindikatorelement (70), das durch das Ansatzteil (68) getragen wird,
- eine Führungsplatte (22), die an dem ersten Ende des Gehäuses (12) befestigbar ist und als Führungsschlitz (24) den Hauptschlitz (26) sowie den ersten, zweiten und dritten Unterschlitz (28, 30, 32) aufweist,
- ein Sektorteil (80), das drehbar auf der Welle (42) gelagert und zwischen dem Gehäuse (12) und dem Hebel (60) positioniert ist, und das eine erste, zum Hebel (60) weisende Seite, eine zweite zum Gehäuse (12) weisende Seite und eine erste, zweite und dritte Öffnung (82, 84, 86) aufweist, die zu der Welle (42) radial beabstandet und in einer Reihe, die sich im wesentlichen parallel zur ersten Richtung erstreckt, angeordnet sind, wobei der Hebel (60) um die Welle (42) verschwenkbar ist, um das Ansatzteil (68) in Deckung mit jeder der Öffnungen (82, 84, 86) zu bringen, und der Hebel (60) um den Schwenkstift (62) verschwenkbar ist, um das Ansatzteil (68) in die Öffnungen (82, 84, 86) hinein und aus diesen heraus zu bewegen,
- ein zweites Positionsindikatorelement (102), das auf der zweiten Seite des Sektorteils (80) angeordnet ist,
- wenigstens einen ersten Sensor (120, 122), der relativ zum Gehäuse (12) fest und in Deckung mit der ersten Öffnung (82) liegt,
- wenigstens einen zweiten Sensor (124, 126), der relativ zum Gehäuse (12) fest und in Deckung mit der zweiten Öffnung (84) liegt,
- wenigstens einen dritten Sensor (128), der realtiv zum Gehäuse (12) fest und in Deckung mit der dritten Öffnung (86) liegt,
- wobei der erste, zweite und dritte Sensor (120-128) bei Annäherung des ersten Positionsindikatorelementes (70) anspricht und der erste Sensor (120, 122) ein Signal erzeugt, das anzeigt, daß das erste Positionsindikatorelement (70) durch die erste Öffnung (82) aufgenommen wird und der Hebel (60) sich in dem ersten Unterschlitz (28) befindet, der zweite Sensor (124, 126) ein Signal erzeugt, das anzeigt, daß das erste Positionsindikatorelement (70) durch die zweite Öffnung (84) aufgenommen wird und der Hebel (60) sich in dem zweiten Unterschlitz (30) befindet, und der dritte Sensor (128) ein Signal erzeugt, das anzeigt, daß das erste Positionsindikatorelement (70) durch die dritte Öffnung (86) aufgenommen wird und der Hebel (60) sich in dem dritten Unterschlitz (32) befindet, und
- mehrere Signalgeneratoren (130, 132, 134), die relativ zum Gehäuse (12) festliegen und in einer Reihe angeordnet sind, die parallel zur ersten Richtung verläuft, wobei die Signalgeneratoren (130, 132, 134) auf eine Annäherung des zweiten Positionsindikatorelementes (102) ansprechen und, sofern das Ansatzteil (68) von einer der Öffnungen (82, 84, 86) aufgenommen wird und der Hebel (60) sich in einem der Unterschlitze (28, 30, 32) befindet, Signale in Abhängigkeit der Verschwenkung des Hebels (60) und des Sektorteils (80) um die Drehwelle (42) erzeugen.

12. Steuerhebelanordnung nach Anspruch 11, gekennzeichnet durch mehrere Rastelemente (72, 94, 96, 98), wobei jedes Rastelement das Ansatzteil (68) lösbar in einer zugehörigen Öffnung (82, 84, 86) festhält.

13. Steuerhebelanordnung nach Anspruch 12, dadurch gekennzeichnet, daß jedes Rastelement ein Rampenteil (94, 96, 98) enthält, welches im Bereich einer zugehörigen Öffnung (82, 84, 86) von dem Sektorteil (80) vorsteht, und das eine an dem Hebel (60) angeordnete Rastfeder (72) vorgesehen ist, die einen Schenkel aufweist, der gleitbar mit dem Rampenteil (94, 96, 98) in Eingriff tritt.

14. Steuerhebelanordnung nach einem der Ansprüche 1 bis 13, gekennzeichnet durch eine am Gehäuse (12) befestigte Schlitzrastfeder (170), die mit dem Hebel (60) in Eingriff tritt und vorgespannt ist, um den Hebel (60) lösbar in einer gewünschten Position innerhalb eines der Unterschlitze (32) zu halten.

15. Steuerhebelanordnung nach einem der Ansprüche 6 bis 14, dadurch gekennzeichnet, daß das erste und zweite Positionsindikatorelement (70, 102) Permanentmagnete und daß die Sensoren (120, 122, 124, 126, 128, 130, 132, 134) Halleffektelemente enthalten.

16. Steuerhebelanordnung nach einem der Ansprüche 1 bis 15, dadurch gekennzeichnet, daß der Schlitz (24) einen Vorwärtsschlitz (28) und einen Parkschlitz (30) enthält, wobei der erste Unterschlitz (28) der Vorwärtsschlitz und der dritte Unterschlitz (32) der Parkschlitz ist, und daß wenigstens einer der Signalgeneratoren (132) aktiviert wird, wenn der Hebel (60) sich in dem Vorwärtsschlitz (28) sowie wenn der Hebel (60) sich in dem Parkschlitz (32) befindet.

17. Steuerhebelanordnung nach Anspruch 16, dadurch gekennzeichnet, daß ein weiterer Signalgenerator (130) aktiviert wird, wenn der Hebel (60) ein Ende des Parkschlitzes (32) erreicht, und daß der erste Signalgenerator (132) aktiviert wird, wenn der Hebel (60) zu dem anderen Ende des Parkschlitzes (32) bewegt wird.

## Revendications

1. Dispositif de levier de commande pour la production de signaux de commande pour une boîte de vitesses commandée en charge, comportant un boîtier (12), dans lequel un levier (60) est monté pivotant, un guide (22) du levier comportant une fente (24), qui loge le levier (60) de telle sorte qu'il est déplaçable et contraint le levier (60) à se déplacer sur un trajet défini, et des générateurs de signaux (120-134) pour produire des signaux qui représentent la position du levier (60) à l'intérieur de la fente (34), la fente (24) contenant une fente principale (26) qui s'étend dans la première direction, caractérisé en ce que la fente (24) possède des première, seconde et troisième fentes secondaires (28,30,32), qui sont séparées de la fente principale (26) et s'étendent parallèlement à cette dernière, que chaque fente secondaire (28,30,32) est reliée à la fente principale (26) par l'intermédiaire de première, seconde et troisième fentes associées de liaison (34,36,38) orientées transversalement par rapport à la première direction, que la première fente de liaison (34) débouche dans une partie centrale de la première fente secondaire (28), que la seconde fente de liaison (36) débouche dans une partie médiane de la deuxième fente secondaire (30) et que la troisième fente de liaison (38) débouche dans une partie d'extrémité de la troisième fente secondaire (32).

2. Dispositif de levier de commande selon la revendication 1, caractérisé en ce que les fentes secondaires (28,30,32) sont disposées selon une rangée qui est essentiellement parallèle à la fente principale (26).

3. Dispositif de levier de commande selon la revendication 1 ou 2, caractérisé en ce que la longueur de chaque fente secondaire (28,30,32) est inférieure à la longueur de la fente principale (26).

4. Dispositif de levier de commande selon l'une des revendications 1 à 3, caractérisé en ce que la seconde fente secondaire (30) est située entre les première et troisième fentes secondaires (28,32).

5. Dispositif de levier de commande selon l'une des revendications 1 à 4, caractérisé en ce que la troisième fente secondaire (32) s'étend depuis sa partie d'extrémité en direction de la seconde et/ou de la première fente secondaire (30,28).

6. Dispositif de levier de commande selon l'une des revendications 1 à 5, caractérisé par
- un boîtier (12) qui contient une paroi latérale (14) et une plaque de guidage (22) pourvue d'une fente de guidage (24),
- un levier (60), qui est articulé sur le boîtier (12) et peut se déplacer dans une première direction et dans une seconde direction qui est perpendiculaire à la première direction et parallèle aux fentes de liaison (34,36,38) et est logé de manière à être déplaçable dans la fente de guidage,
- un premier élément indicateur de position (70) porté par le levier,
- une partie en forme de secteur (80), qui est montée de manière à pouvoir tourner dans le boîtier (12) entre la paroi latérale (14) et le levier (60) et comporte une première face tournée vers le levier (60), une seconde face tournée vers la paroi latérale (14) et plusieurs ouvertures (82,84,86) dans un plan qui est parallèle à la première direction, la partie en forme de secteur (80) étant montée de manière à pouvoir pivoter dans la première direction, de manière à pouvoir amener le premier élément indicateur de position (70) en recouvrement avec chacun des orifices (82,84,86), tandis que le levier (60) est monté de manière à pouvoir pivoter dans la seconde direction pour pouvoir amener le premier élément indicateur de position (70) dans les ouvertures (82,84,86) et l'en ressortir, et que la partie en forme de secteur (80) et le levier (60) peuvent pivoter en commun dans la première direction, dans la mesure où le premier élément d'indication de position (70) est logé dans l'une des ouvertures (82,84,86),
- un second élément d'indication de position (102), qui est disposé sur la seconde face de l'élément en forme de secteur (80),
- plusieurs capteurs (120,122,124,126,128), qui sont disposés sur la paroi latérale (14) et sont situés en recouvrement avec respectivement une ouverture associée (82,84,86) et qui répondent lors du rapprochement du premier élément d'indication de position (70) et indiquent si le premier élément d'indication de position (70) est reçu dans l'ouverture correspondante (82,84,86), et
- plusieurs générateurs de signaux (130,132,134), qui sont disposés sur la paroi latérale (14) et sont situés dans un plan parallèlement à la première direction et qui répondent lors du rapprochement du second élément d'indication de position et produisent des signaux en fonction de la position pivotée de la partie en forme de secteur (80).

7. Dispositif de levier de commande selon la revendication 6, caractérisé en ce qu'il est prévu des première, seconde et troisième ouvertures (82,84,86) et/ou des premier et second générateurs de signaux (130,132,134).

8. Dispositif de levier de commande selon l'une des revendications 1 à 7, caractérisé en ce qu'un ressort de rappel (142) du levier est accroché au levier (60) et sollicite le levier (60) en direction d'une extrémité de la fente principale (26) de la fente de guidage (24).

9. Dispositif de levier de commande selon l'une des revendications 1 à 8, caractérisé en qu'un ressort de rappel transversal (150) est accroché au levier (60) et sollicite le levier (60) transversalement par rapport à la fente principale (26), notamment en direction de la partie en forme de secteur (80).

10. Dispositif de levier de commande selon l'une des revendications 6 à 9, caractérisé en ce qu'un ressort de centrage est accroché à la partie en forme de secteur (80) et sollicite la partie en forme de secteur (80) dans une position médiane.

11. Dispositif à levier de commande selon l'une des revendications 1 à 10, caractérisé par
- un boîtier (12) qui possède, à une extrémité, une ouverture et à proximité d'une seconde extrémité, un perçage (18),
- un arbre (42), qui est logé de manière à pouvoir tourner dans le perçage (18),
- un bras (44), qui est relié à l'arbre (42) et fait saillie essentiellement radialement à partir de ce dernier,
- un levier (60), qui est articulé de manière à pouvoir pivoter sur le bras (44) et peut pivoter autour d'une goupille (62) orientée perpendiculairement à l'axe de l'arbre (42), le levier (60) pouvant se déplacer dans une première direction autour de l'arbre (42) et dans une seconde direction autour de la goupille (32),
- une partie saillante (68), qui fait saillie à partir du levier (62) dans une zone distante radialement de l'arbre (42),
- un premier élément d'indication de position (70), qui est porté par la partie saillante (68),
- une plaque de guidage (22), qui peut être fixée sur la première extrémité du boîtier (12) et comporte, en tant que fente de guidage (24), la fente principale (26) et les première, seconde et troisième fentes secondaires (28,30,32),
- une partie en forme de secteur (80), qui est montée de manière à pouvoir tourner sur l'arbre (42) et est positionnée entre le boîtier (12) et le levier (60), et possède une première face tournée vers le levier (60), une seconde face tournée vers le boîtier (12) et des première, seconde et troisième ouvertures (82,84,86), qui sont distantes radialement de l'arbre (42) et sont disposées suivant une rangée, qui s'étend essentiellement parallèlement à la première direction, le levier (60) pouvant pivoter autour de l'arbre (42) de manière à amener la partie saillante (68) en recouvrement avec chacune des ouvertures (82,84,86), et le levier (60) pouvant pivoter autour de la goupille (62) de manière à amener la partie saillante (68) dans les ouvertures (82,84,86) et l'en retirer,
- un second élément d'indication de position (102), qui est disposé sur la seconde face de la partie en forme de secteur (80),
- au moins un premier secteur (120,122), qui est fixe par rapport au boîtier (12) et est disposé en recouvrement avec la première ouverture (82),
- au moins un second capteur (124,126), qui est fixe par rapport au boîtier (12) et est situé en recouvrement avec la seconde ouverture (84),
- au moins un troisième capteur (128), qui est fixe par rapport au boîtier et est placé en recouvrement avec la troisième ouverture (86),
- les premier, second et troisième capteurs (120-128) répondant lors du rapprochement du premier élément d'indication de position (70) et le premier capteur (120,122) produisant un signal qui indique que le premier élément d'indication de position (70) est reçu par la première ouverture (82) et que le levier (60) est situé dans la première fente secondaire (28), le second capteur (124,126) produisant un signal qui indique que le premier élément indicateur de position (70) est reçu par la seconde ouverture (84) et que le levier (60) est situé dans la seconde fente secondaire (30), et le troisième capteur (128) produisant un signal qui indique que le premier élément d'indication de position (70) est reçu par la troisième ouverture (86) et que le levier (60) est situé dans la troisième fente secondaire (32), et
- plusieurs générateurs de signaux (130,132,134), qui sont fixes par rapport au boîtier (12) et sont disposés selon une rangée qui est parallèle à la première direction, les générateurs de signaux (130,132,134) répondant lors du rapprochement du second élément d'indication de position (102), et dans la mesure où la partie saillante (68) est reçue par l'une des ouvertures (82,84,86) et où le levier (60) est situé dans l'une des fentes secondaires (28,30,32), produisent des signaux en fonction du pivotement du levier (60) et de la partie en forme de secteur (80) autour de l'arbre de rotation (42).

12. Dispositif de levier de commande selon la revendication 11, caractérisé par plusieurs éléments d'encliquetage (72,94,96,98), chaque élément d'encliquetage maintenant fermement, de façon amovible, la partie saillante (68) dans une ouverture associée (82,84,86).

13. Dispositif de levier de commande selon la revendication 12, caractérisé en ce que chaque élément d'encliquetage contient une partie formant rampe (94,96,98), qui fait saillie à partir de la partie en forme de secteur (80) dans la zone d'une ouverture associée (82,84,86) et qu'il est prévu un ressort d'encliquetage (72), qui est disposé sur le levier (60) et possède une branche qui s'engage avec possibilité de glissement contre la partie formant rampe (94,96,98).

14. Dispositif de levier de commande selon l'une des revendications 1 à 13, caractérisé par un ressort d'encliquetage fendu (170), qui est fixé sur le boîtier (12), engrène avec le levier (60) et est précontraint de manière à maintenir le levier (60), de façon amovible, dans une position désirée à l'intérieur de l'une des fentes secondaires (32).

15. Dispositif de levier de commande selon l'une des revendications 6 à 14, caractérisé en ce que les premier et second éléments d'indication de position (100,102) sont des aimants permanents et que les capteurs (120,122,124,126,128,130,132,134) contiennent des éléments à effet Hall.

16. Dispositif de levier de commande selon l'une des revendications 1 à 15, caractérisé en ce que la fente (24) comporte une fente de marche avant (28) et une fente de parcage (30), la première fente secondaire (28) étant la fente de marche avant et la troisième fente secondaire (30) étant la fente de parcage, et qu'au moins l'un des générateurs de signaux (132) est activé lorsque le levier (60) est situé dans la fente de marche avant (28) ainsi que lorsque le levier (60) est situé dans la fente de parcage (32).

17. Dispositif de levier de commande selon la revendication 16, caractérisé en ce qu'un autre générateur de signaux (130) est activé lorsque le levier (60) atteint une extrémité de la fente de parcage (32), et que le premier générateur de signaux (132) est activé lorsque le levier (60) est déplacé vers l'autre extrémité de la fente de parcage (32).

## Claims

1. Control lever assembly for generating control signals for a power shift transmission with a housing (12) in which a lever (60) is pivotally mounted, with a lever guide (22) with a slot (24) which slidably receives the lever (60) and constrains the lever (60) to move within a defined path, and signal generators (120-134) for generating signals which represent the position of the lever (60) within the slot (24), the slots (24) including a main slot (26) extending in a first direction, characterised in that the slot (24) has a first, second and third sub-slot (28, 30, 32) which extend separately from the main slot (26) and parallel thereto, in that each sub-slot (28, 30, 32) is connected to the main slot (26) by an associated first, second and third connecting slot (34, 36, 38) aligned transversely to the first direction, in that the first connecting slot (34) opens into a central region of the first sub-slot (28), in that the second connecting slot (36) opens into a central region of the second sub-slot (30), and in that the third connecting slot (38) opens into a terminal region of the third sub-slot (32).

2. Control lever assembly according to claim 1, characterised in that the sub-slots (28, 30, 32) are arranged in an array which lies substantially parallel to the main slot (26).

3. Control lever assembly according to claim 1 or 2, characterised in that the length of each sub-slot (28, 30, 32) is shorter than the main slot (26).

4. Control lever assembly according to one of claims 1 to 3, characterised in that the second sub-slot (30) lies between the first and the third sub-slots (28, 32).

5. Control lever assembly according to one of claims 1 to 4, characterised in that the third sub-slot (32) extends from its terminal region in the direction of the second and/or first sub-slot (30, 28).

6. Control lever assembly according to one of claims 1 to 5, characterised by
- a housing (12), which includes a side wall (14) and a guide plate (22) with a guide slot (24),
- a lever (60) which is articulated to the housing (12) and is movable in a first direction and in a second direction perpendicular to the first direction and parallel to the connecting slots (34, 36, 38), and is movably accommodated in the guide slot (24),
- a first position indicating element (70) supported by the lever,
- a sector member (80) rotatably mounted in the housing (12) between the side wall (14) and the lever (60), said sector member having a first side facing the lever (60) and a second side facing the side wall (14) and a plurality of apertures (82, 84, 86) arranged along a plane lying parallel to the first direction, the sector member (80) being pivotal in the first direction to move the first position indicating element (70) into registry with each of the apertures (82, 84, 86), the lever (60) being pivotal in the second direction to move the first position indicating element (70) into and out of the apertures (82, 84, 86), and the sector member (80) and the lever (60) being pivotal together in the first direction, when the first position indicating element (70) is received by one of the apertures (82, 84, 86),
- a second position indicating element (102) located on the second side of the sector member (80),
- a plurality of sensors (120, 122, 124, 126, 128), each sensor being in registry with a corresponding one of the apertures, the sensors being responsive to proximity of the first position indicating element (70) and indicating whether the first position indicating element (70) is received by the corresponding aperture (82, 84, 86), and
- a plurality of signal generators (130, 132, 134) lying in a plane parallel to the first direction, and which respond to proximity of the second position indicating element (102) and generate signals in dependence on the pivotal position of the sector member (80).

7. Control lever assembly according to claim 6, characterised in that there are provided a first, second and third aperture (82, 84, 86) and/ or a first, second and third signal generator (130, 132, 134).

8. Control lever assembly according to one of claims 1 to 7, characterised in that a lever return spring (142) engages on the lever (60) and urges the lever (60) in the direction of one end of the main slot (26) of the guide slot (24).

9. Control lever assembly according to one of claims 1 to 8, characterised in that a transverse return spring (150) engages on the lever (60) and urges the lever (60) in the direction of the sector member (80).

10. Control lever assembly according to one of claims 6 to 9, characterised in that a centering spring engages on the sector member (80) and urges the sector member (80) into a centered position.

11. Control lever assembly according to one of claims 1 to 10, characterised by
- a housing (12) which has an aperture at one end, and a bore (18) close to a second end,
- a shaft (42) rotatably received by the bore (18),
- an arm (44) connected to the shaft (42) and extending substantially radially therefrom,
- a lever (60) pivotally coupled to the arm (44) and pivotal about a pivot pin which is perpendicular to the axis of the shaft (42), the lever (60) being movable about the shaft (42) in a first direction and about the pivot pin (62) in a second direction,
- a stub member (68), projecting from the lever (62) in an area spaced radially from the shaft (42),
- a first position indicating element (70) which is carried by the stub member (68),
- a guide plate (22) attachable to the first end of the housing (12) and has as a guide slot (24) the main slot (26) and the first, second and third sub-slots (28, 30, 32),
- a sector member (80) rotatably mounted on a shaft (42) and positioned between the housing (12) and the lever (60), said sector member having a first side facing the lever (60) a second side facing the housing (12) and a first, second and third aperture (82, 84, 86), which are spaced radially apart from the shaft (42) and are located in an array extending substantially parallel to the first direction, the lever (60) being pivotal about the shaft (42) to move the stub member (68) into registry with each of the apertures (82, 84, 86), and the lever (60) is pivotal about the pivot pin (62) in order to move the stub member (68) into and out of the apertures (82, 84, 86),
- a second position indicating element (102) located on the second side of the sector member (80),
- at least one first sensor (120, 122), which is fixed relative to the housing (12) and is in registry with the first aperture (82),
- at least one second sensor (124, 126) which is fixed relative to the housing (12) and is in registry with the second aperture (84),
- at least one third sensor (128) which is fixed relative to the housing (12) and is in registry with the third aperture (86),
- the first, second and third sensors (120-128) responding to proximity of the first position indicating element (70) and the first sensor (120, 122) generating a signal which indicates that the first position indicating element (70) is received by the first aperture (82) and the lever (60) is located in the first sub-slot (28) the second sensor (124, 126) generating a signal which indicates that the first position indicating element (70) is received by the second aperture (84) and the lever (60) is located in the second sub-slot (30) and the third sensor (128) generating a signal which indicates that the first position indicating element (70) is received by the third aperture (86) and the lever (60) is located in the third sub-slot (32), and
- a plurality of signal generators (130, 132, 134) fixed with respect to the housing (12) and arranged in an array extending parallel to the first direction, the signal generators (130, 132, 134) being responsive to proximity of the second position indicating element (102) and, when the stub member (68) is received by one of the apertures (82, 84, 86) and the lever (60) is located in one of the sub-slots (28, 30, 32), generates signals in dependence on the pivoting of a lever (60) and of the sector member (80) about the rotary shaft (42).

12. Control lever assembly according to claim 11, characterised by a plurality of detent members (72, 94, 96, 98), each detent member holding the stub member (68) securely but releasably in an associated aperture (82, 84, 86).

13. Control lever assembly according to claim 12, characterised in that each detent member includes a ramp member (94, 96, 98) which projects in the region of an associated aperture (82, 84, 86) from the sector member (80), and in that there is provided a detent spring (72) mounted on the lever (60), and which has an arm, which slidably engages with the ramp member (94, 96, 98).

14. Control lever assembly according to one of claims 1 to 13, characterised by a slot detent spring (170), secured to the housing (12) and which engages with the lever (60) and is biased releasably to hold the lever (60) in a desired position within one of the sub-slots (32).

15. Control lever assembly according to one of claims 6 to 14, characterised in that the first and second position indicating elements (70, 102) include permanent magnets, and that the sensors (120, 122, 124, 126, 128, 130, 132, 134) contain Hall effect elements.

16. Control lever assembly according to one of claims 1 to 15, characterised in that the slot (24) includes a forward slot (28) and a parking slot (30) the first sub-slot (28) being the forward slot and the third sub-slot (32) being the parking slot, and in that at least one of the signal generators (132) is actuated when the lever (60) is in the forward slot (28) or when the lever (60) is in the parking slot (32).

17. Control lever assembly according to claim 16, characterised in that a further signal generator (130) is actuated when the lever (60) reaches an end of the parking slot (32) and in that the first signal generator (132) is actuated when the lever (60) is moved to the other end of the parking slot (32).
